# EUROPEAN PATENT APPLICATION

(11) **EP 2 412 738 A1**
(43) Date of publication of application: **01.02.2012**
(21) Application number: 10756202.7
(22) Date of filing: 26.03.2010
(51) Int. Cl.: C08F 299/06, C08F 2/44, C08F 290/00, C08J 5/18, G02F 1/1333

(54) **TRANSPARENT COMPOSITE MATERIAL**

(30) Priority: 27.03.2009 JP 2009080032
(71) Applicant: SHOWA DENKO K.K., Minato-ku, Tokyo 105-8515 (JP)
(72) Inventor: TOITA Ryoji, Tokyo 105-8518 (JP); MUKOBAYASHI Miyo, Tokyo 105-8518 (JP)
(74) Representative: Strehl Schübel-Hopf & Partner
(86) International application number: PCT/JP2010/055306
(87) International publication number: WO 2010/110406

(57) **Abstract**

This invention relates to a transparent composite material having a low coefficient of liner thermal expansion and excellent transparency and flexibility, which is formed by curing a resin composition containing urethane (meth)acrylate, in which 10 to 40% by mass of synthetic smectite that is organized with a quaternary ammonium salt and/or a quaternary phosphonium salt and has a number average particle diameter of from 10 to 300 nm and an aspect ratio of from 10 to 300 is dispersed; and a transparent composite sheet using the material.

## Description

### TECHNICAL FIELD

The present invention relates to a transparent composite material. Specifically, the present invention relates to a transparent composite material having a small coefficient of linear thermal expansion, a transparent composite sheet made of the material, a method for producing the same, and a display device and a substrate for a solar cell using the same.

### BACKGROUND ART

Glass has been widely used as a substrate for a display device such as a liquid crystal display device and an organic EL display device, a substrate for a color filter, a substrate for a solar cell, and the like. In recent years, however, a plastic material is being considered as a substitute for a glass substrate owing to such reasons that the glass substrate is liable to fracture, cannot be bent,
is not suitable for reduction in weight due to the large specific gravity thereof, and the like. For example, substrates made of polyethylene terephthalate, polyethylene naphthalate, polycarbonate, polyolefin or polyethersulfone are proposed (for example, in JP-A-2007-268711, Patent Document 1).

However, the conventional plastic material for substituting for glass has a larger coefficient of linear thermal expansion than glass. Accordingly, upon producing a display substrate with the material, the difference in coefficient of linear thermal expansion between the plastic substrate and a transparent electrode formed thereon produces such problems as a warpage, breakage of wiring, and the like upon heating or cooling, and therefore, a transparent plastic substrate having a small coefficient of linear thermal expansion is being demanded.

JP-A-2007-512547 (Patent Document 2) (WO2005/043203) discloses an optical film comprising urethane (meth)acrylate containing a lamellar clay mineral, but the invention intends to improve the glare reduction. Furthermore, since the lamellar clay mineral disclosed in the example of Patent Document 2 is a natural clay mineral, the transparency of the resin itself cannot be maintained. Accordingly, the document does not relate to urethane (meth)acrylate that has transparency and a low coefficient of linear thermal expansion.

### PRIOR ART DOCUMENT

### Patent Document

[Patent Document 1] JP-A-2007-268711
[Patent Document 2] JP-A-2007-512547

### DISCLOSURE OF THE INVENTION

### PROBLEMS TO BE SOLVED BY THE INVENTION

An object of the invention is to provide a transparent composite material, even though it is a plastic material, that has a small coefficient of linear thermal expansion, is excellent in transparency, has satisfactory flexibility and can be suitably used as a plastic substrate for a display such as a liquid crystal display device and an organic EL display device, a substrate for a display, such as a substrate for electronic paper and the like, and a substrate for a solar cell.

As a result of earnest investigations made by the inventors for solving the problems, it has been found that the problems can be solved by a transparent composite material constituted by a resin composition containing urethane (meth)acrylate having dispersed therein synthetic smectite having been cationically exchanged with a quaternary ammonium salt and/or a quaternary phosphonium salt. Accordingly, the invention relates to a transparent composite material, a transparent composite sheet made of the material, a method for producing the same, and a display device and a substrate for a solar cell using the transparent composite material, which are described below.

1. A transparent composite material comprising a cured product of a resin composition containing urethane (meth)acrylate, in which 10 to 40% by mass of synthetic smectite that is organized with a quaternary ammonium salt and/or a quaternary phosphonium salt and has a number average particle diameter of from 10 to 300 nm and an aspect ratio of from 10 to 300 is dispersed.
2. The transparent composite material according to 1 above, wherein the urethane (meth)acrylate is synthesized using polyol having a polycarbonate structure.
3. The transparent composite material according to 1 or 2 above, wherein the urethane (meth)acrylate is synthesized from polyol having a unit represented by formula (1) 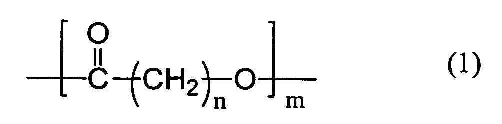 (in the formula, m represents a positive integer and n represents an integer of 3 to 7) and/or (meth)acrylate containing hydroxyl group.
4. The transparent composite material according to 3 above, wherein the urethane (meth)acrylate is synthesized using caprolactone modified polyol.
5. The transparent composite material according to 3 above, wherein the urethane (meth)acrylate is synthesized using caprolactone modified (meth)acrylate.
6. The transparent composite material according to any one of 1 to 5 above, wherein the urethane (meth)acrylate is synthesized using one or more polyisocyanate selected from hydrogenerated xylylene diisocyanate, hydrogenerated diphenylmethane diisocyanate, isophorone diisocyanate, hexamethylene diisocyanate and tris(6-isocyanatehexyl)isocyanurate.
7. The transparent composite material according to any one of 1 to 6 above, wherein the resin component containing urethane (meth)acrylate comprises 1 to 70 mass% of a reactive compound having an ethylenically unsaturated group.
8. The transparent composite material according to 1 above, wherein the synthetic smectite is at least one selected from synthetic hectorite, synthetic saponite and synthetic stevensite.
9. The transparent composite material according to 1 or 8 above, wherein the quaternary ammonium salt for organizing the synthetic smectite is at least one selected from lauryltrimethylammonium salt, stearyltrimethylammonium salt, trioctylmethylammonium salt, distearyldimethylammonium salt, dihydrogenated beef tallow dimethylammonium salt, distearyldibenzylammonium salt and N-polyoxyethylene-N-lauryl-N,N-dimethylammonium salt.
10. The transparent composite material according to 1, 8 or 9 above, wherein at least a part of hydroxyl groups present on a surface of the synthetic smectite is treated with a surface modification agent.
11. The transparent composite material according to 10 above, wherein the surface modification agent is at least one member selected from a silane coupling agent, a titanate coupling agent, a glycidyl compound, an isocyanate compound, carboxylic acid and alcohol.
12. A transparent sheet comprising the transparent composite material according to any one of 1 to 11 above and having an average coefficient of linear thermal expansion of 30 ppm/°C or less in a planar direction at from 50 to 250°C and a total light transmittance of 85% or more per 100 µm in thickness.
13. A method for producing the transparent composite sheet having an average coefficient of linear thermal expansion of 30 ppm/°C or less in a planar direction at from 50 to 250°C and a total light transmittance of 85% or more per 100 µm in thickness, comprising the steps of: coating a resin composition comprising synthetic smectite that is organized with a quaternary ammonium and/or a quaternary phosphonium, urethane (meth)acrylate and a solvent on a flat plane having a smooth surface; then drying the solvent; covering the coated resin composition with sheets or films having a smooth surface; and curing with an electron beam (EB), an ultraviolet ray (UV) or heat.
14. The method for producing the transparent composite sheet according to 13 above, wherein the resin composition further comprises a reactive compound having an ethylenically unsaturated group.
15. A display device comprising, as a substrate, the transparent composite material according to any one of 1 to 11 above.
16. The display device according to 15 above, wherein the display device is a liquid crystal display, an organic EL display or electronic paper.
17. A substrate for a solar cell comprising, as a substrate, the transparent composite material according to any one of 1 to 11 above.

### EFFECTS OF THE INVENTION

The conventional plastic substrate for a display suffers such problems as a warpage, breakage of wiring, and the like upon heating or cooling due to the large difference in coefficient of linear thermal expansion between the substrate and the transparent electrode provided thereon. The substrate for a display using the transparent composite material of the invention solves the problems owing to the considerably small coefficient of linear thermal expansion and can provide a display having high durability, which is considerably useful industrially. The transparent composite material of the invention which employs a specific resin composition can provide a transparent sheet having a small coefficient of linear thermal expansion and excellent flexibility, and thus can be used as a flexible display substrate for a liquid crystal display, an organic EL display, electronic paper and the like; a substrate for a solar cell; and the like.

### MODE FOR CARRYING OUT THE INVENTION

The present invention will be described in detail hereinbelow.

### Transparent Composite Material:

A glass cloth, nanosilica and the like have been known as a filler that is capable of improving mechanical characteristics and thermal characteristics of a resin while maintaining transparency thereof. However, a glass cloth has a coefficient of linear thermal expansion that is largely different from that of a resin, and thus the resin is whitened due to microcracks upon heating and cooling to lose transparency of the material. In the case where nanosilica is filled, the transparency can be maintained when the addition amount thereof is small, but it is necessary to fill nanosilica in a large amount for attaining such a low coefficient of linear thermal expansion that is required for use as a display substrate and a substrate for a solar cell, and the transparency cannot be maintained in this case. In the case where natural clay, such as bentonite and the like, is filled, mechanical characteristics and thermal characteristics can be improved, but impurities, such as iron oxide, quartz and the like, in the natural clay crystals cannot be completely removed, thereby failing to improve all mechanical characteristics, thermal characteristics and transparency.

The transparent composite material of the invention is obtained by curing a resin composition which contains urethane (meth)acrylate having dispersed therein synthetic smectite having specific properties, and the transparent composite material has an average coefficient of linear thermal expansion in the planar direction of 30 ppm/°C or less at from 50 to 250°C; and has excellent flexibility.

In the invention, the transparency of the transparent composite material is evaluated in terms of total light transmittance. The transparent composite material of the invention has a total light transmittance of 85% or more per 100 µm in thickness, and a haze value of 5% or less. The total light transmittance is preferably 90% or more. The transparent composite material preferably has a haze value of 3% or less. In the case where the haze value exceeds 5%, transmitted light is distorted to lose sharpness. The total light transmittance is measured according to JIS K7361-1, and the haze value is measured according to JIS K7136.

The transparent composite material of the invention is not limited in shape, and a molded article thereof in a shape of a film, a sheet, a flat plate or the like is particularly preferred. An article having a thickness of from 10 to 200 µm is referred to as a film, an article having a thickness of larger than 200 µm and 5,000 µm or less is referred to as a sheet, and an article having a thickness larger than 5,000 µm is referred to as a plate, but hereinafter, the articles are referred to as sheets irrespective of the thickness of a film, a sheet or a plate.

### Resin Composition:

The resin composition used in the present invention is a composition, wherein synthetic smectite that is organized with a quaternary ammonium salt and/or a quaternary phosphonium salt and has a number average particle diameter of from 10 to 300 nm and an aspect ratio of from 10 to 300 is dispersed in urethane (meth)acrylate as being a resin component. The resin component may contain a reactive compound described later. Generally, the word "resin" means both of the resin in a prepolymer state before being cured (including oligomer, curing agent and additives) and the cured product thereof. In the present specification, the "resin composition" refers to the resin in a prepolymer state before being cured. The composition ratio of the resin composition is the composition ratio of a cured product, excluding the solvent component.

### Urethane (meth)acrylate:

Urethane (meth)acrylate in the present invention means (A) resin obtained by reacting polyol, a polyisocyanate compound and a (meth)acrylate compound having a hydroxyl group, and further an allyl ether compound having a hydroxyl group as needed; (B) resin having an ethylenically unsaturated group obtained by reacting an isocyanate compound having an ethylenically unsaturated group with polyol and/or a polyhydroxy compound and (C) resin obtained by reacting a (meth)acrylate compound having a hydroxyl group with a polyisocyante compound. The urethane (meth)acrylate can be produced by a known method.

As the urethane (meth)acrylate, preferred are (1) urethane (meth)acrylate synthesized from polyol having a polycarbonate structure and (2) urethane (meth)acrylate synthesized from polyol containing a unit represented by formula (1) 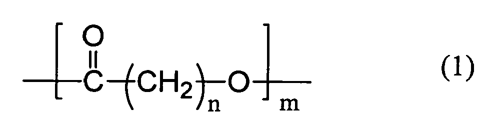 (in the formula, m represents a positive integer and n represents an integer of 3 to 7) and/or (meth)acrylate having a hydroxyl group, as being capable of exhibiting a transparency and a low coefficient of linear thermal expansion in a transparent sheet produced from the transparent composite material of the present invention.

Generally, for attaining a low coefficient of linear thermal expansion (30 ppm/°C or less) by adding synthetic smectite while maintaining the transparency, it is necessary to add a large amount (more than 40% by mass) of synthetic smectite to a thermosetting resin. However, the transparency and mechanical strength inherent to the resin cannot be exhibited due to the large addition amount of synthetic smectite, thereby providing a brittle and fragile material. In the case where the urethane (meth)acrylate as mentioned in (1) and (2) above is used, the transparency and the heat resistance are well balanced, and particularly, ductility and flexibility required for a plastic film can be attained. Furthermore, a low coefficient of linear thermal expansion can be attained even though the addition amount of the synthetic smectite is reduced to a value lower than 40% by mass.

Examples of polyol having a polycarbonate structure include polycarbonate polyol derived from aliphatic polyol such as ethylene glycol, propylene glycol, 1,3-propanediol, 1,4-butanediol, 1,3-butanediol, 1,5-pentanediol, 1,6-hexanediol, neopentyl glycol, 1,2-cyclohexanediol, 1,3-cyclohexanediol, 1,4-cyclohexanediol, 1,4-cyclohexanedimethanol, tricyclodecanedimethanol, hydrogenated bisphenol A, 1,3-adamantanediol and 1,3,5-adamantanetriol. Among these polyols, polycarbonatediol synthesized from 1,4-cyclohexanedimethanol is particularly preferable since a transparent composite material being excellent in transparency, ductility and thermal resistance can be obtained. Also, polyol having a molecular weight of 800 or more is preferable since the ductility can be further improved. The polyol can be used solely or in combination of two or more thereof.

Examples of the polyol containing a unit represented by formula (1) include five- to nine-membered ring (number of carbon atoms is 4 to 8) lactone modified polyols of polyols such as ethylene glycol, propylene glycol, 1,3-propanediol, 1,4-butanediol, 1,3-butanediol, 1,5-pentanediol, neopentyl glycol, 1,6-hexanediol, 1,4-cyclohexanedimethanol, diethylene glycol, tricyclodecane dimethanol, glycerin, trimethylolpropane and pentaerythritol. Among these, caprolactone modified polyol (polycaprolactone polyol) where n is 5 is particularly preferable.

Examples of the hydroxyl group-containing (meth)acrylate compound containing a unit represented by formula (1) include five- to nine-membered ring (number of carbon atoms is 4 to 8) lactone modified compounds of (meth)acrylates having a hydroxyl group such as 2-hydroxyethyl(meth)acrylate, 2-hydroxypropyl(meth)acrylate, 3-hydroxybutyl(meth)acrylate, polyethylene glycol mono(meth)acrylate, polypropylene glycol mono(meth)acrylate, tris(hydroxylethyl)isocyanurate di(meth)acrylate and pentaerythritol tri(meth)acrylate. Among these, caprolactone modified (meth)acrylate where n is 5 is particularly preferable.

In polyol and a (meth)acrylate compound having a hydroxyl group which contain a unit represented by formula (1), the number of units per molecule, m, is not particularly limited. In order to maintain mechanical characteristics of urethane (meth)acrylate, the number of units per molecule is preferably 1 to 5, and particularly preferably 1 to 3.

Examples of the polyisocyanate compound include tolylene diisocyanate (TDI), xylylene diisocyanate (XDI), diphenyl methane diisocyante (MDI), hexamethylene diisocyanate (HDI), hydrogenated xylylene diisocyanate (H-XDI), hydrogenated diphenyl methane diisocyanate (H-DMI), isophorone diisocyanate (IPDI) and trimer compounds of these isocyanates. Among these polyisocyanate compounds, hexamethylene diisocyanate (HDI), hydrogenated xylylene diisocyanate (H-XDI), hydrogenated diphenyl methane isocyanate (H-DMI), isophorone diisoocyanate (IPDI) and tris(6-isocyanatehexyl)isocyanurate are particularly preferable in terms of transparency, ductility and thermal resistance. These polyisocyanate compounds may be used solely or in combination of two or more thereof.

Examples of (meth)acrylate compounds having a hydroxyl group include 2-hydroxyethyl(meth)acrylate, 2-hydroxypropyl(meth)acrylate, 3-hydroxybutyl(meth)acrylate, polyethylene glycol mono(meth)acrylate, polypropylene glycol mono(meth)acrylate,tris(hydroxylethyl)isocyanurate di(meth)acrylate and pentaerythritol tri(meth)acrylate. These (meth)acrylate compounds having a hydroxyl group may be used solely or in combination of two or more thereof.

Examples of the allyl ether compounds having a hydroxyl group used as a raw material of resin as needed include ethylene glycol monoallyl ether, diethylene glycol monoallyl ether, triethylene glycol monoallyl ether, polyethylene glycol monoallyl ether, propylene glycol monoallyl ether, dipropylene glycol monoallyl ether, tripropylene glycol monoallyl ether, 1,3-butylene glycol monoallyl ether, hexylene glycol monoallyl ether, octylene glycol monoallyl ether, trimethylol propane diallyl ether, glycerin diallyl ether and pentaerythritol triallyl ether. These allyl ether compounds having a hydroxyl group may be used solely or in combination of two or more thereof.

### [Reactive compound]

In the resin component of the resin composition, a reactive compound may be added for such purposes as control of the curing rate, adjustment of the viscosity (improvement of workability), enhancement of the crosslinking density and addition of functionalities. The reactive compound is not particularly limited, and various kinds thereof may be used, and a compound having a radical polymerizable carbon-carbon double bond (ethylenically unsaturated group) such as a vinyl group and an allyl group is preferred for reacting with urethane (meth)acrylate. Examples of such a compound include a monofunctional monomer having one ethylenically unsaturated group in one molecule, a polyfunctional monomer having two or more ethylenically unsaturated groups in one molecule and an oligomer thereof. Preferred specific examples of the reactive compound are described below.

Examples of the monofunctional monomer include an aliphatic (meth)acrylate, such as methyl (meth)acrylate, ethyl (meth)acrylate, n-butyl (meth)acrylate, sec-butyl (meth)acrylate, t-butyl (meth)acrylate, 2-ethylhexyl (meth)acrylate, octyl (meth)acrylate, dodecyl (meth)acrylate, octadecyl (meth)acrylate, isobornyl (meth)acrylate, cyclohexyl (meth)acrylate, methylcyclohexyl (meth)acrylate, 4-t-butylcyclohexyl (meth)acrylate, dicyclopentenyloxymethyl (meth)acrylate, dicyclopentenyloxyethyl (meth)acrylate, ethoxyethyl (meth)acrylate, ethoxydiethylene glycol (meth)acrylate, 2-hydroxyethyl (meth)acrylate and 2-hydroxypropyl (meth)acrylate; an aromatic (meth)acrylate, such as benzyl (meth)acrylate, phenyl (meth)acrylate, phenoxyethyl (meth)acrylate, phenoxydiethylene glycol (meth)acrylate, 1-naphthyl (meth)acrylate, fluorophenyl (meth)acrylate, chlorophenyl (meth)acrylate, cyanophenyl (meth)acrylate, methoxyphenyl (meth)acrylate and biphenyl (meth)acrylate; a haloalkyl (meth)acrylate such as fluoromethyl (meth)acrylate and chloromethyl (meth)acrylate; a (meth)acrylate compound such as glycidyl (meth)acrylate, alklylamino (meth)acrylate and cyanoacrylate ester; a nitrogen-containing monomer such as acrylamide, N,N-dimethylacrylamide, N,N-diehylacrylamide, N-vinylformamide, N-vinylacetamide, N-vinyl-ε-caprolactam, N-vinylpyrrolidone, 1-vinylimidazole, N-vinylcarbazole, N-vinylmorpholine, N-vinylpyridine and acryloylmorpholine; styrene, α-methylstyrene, chlorostyrene, styrenesulfonic acid, 4-hydroxystyrene, vinyltoluene, vinyl acetate, vinyl propionate, vinyl benzoate and the like.

Examples of the polyfunctional monomer include a di(meth)acrylate compound such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, 1,3-butylene glycol di(meth)acrylate, 1,4-butanediol di(meth)acrylate, 1,5-pentanediol di(meth)acrylate, 1,6-hexanediol di(meth)acrylate, neopentyl glycol di(meth)acrylate, 1,9-nonanediol di(meth)acrylate, 1,10-decanediol di(meth)acrylate, dimethyloltricyclodecane di(meth)acrylate, polybutadiene di(meth)acrylate, 2,2-bis(4-(meth)acryloyloxyphenyl)propane, 2,2-bis(4-(ω-(meth)acryloyloxypolyethoxy)phenyl)propane, and di(meth)acrylate of an ethylene oxide adduct of bisphenol A; a trifunctional crosslinking monomer such as trimethylolethane tri(meth)acrylate, trimethylolpropane tri(meth)acrylate, triacrylate of an ethylene oxide adduct of trimethylolpropane and pentaerythritol tri(meth)acrylate; a tetrafunctional or higher polyfunctional acrylate such as pentaerythritol tetra(meth)acrylate, tetra(meth)acrylate of an ethylene oxide adduct of pentaerythritol, and dipentaerythritol hexa(meth)acrylate; an aromatic diallyl carboxylate compound such as diallyl phthalate, diallyl isophthalate, dimethallyl isophthalate, diallyl terephthalate, triallyl trimellitate, diallyl 2,6-naphthalenedicarboxylate, diallyl 1,5-naphthalanedicarboxylate, allyl 1,4-xylenedicarboxylate and diallyl 4,4'-diphenyldicarboxylate; and an allyl compound such as diallyl cyclohexanedicarboxylate, tri(meth)allyl isocyanurate, tri(meth)allyl cyanurate and diallyl chlorendate.

Examples of a reactive oligomer include oligomers of urethane (meth)acrylate other than the above-mentioned urethane (meth)acrylate, epoxy acrylate, polyester (meth)acrylate, polyether (meth)acrylate, acryl (meth)acrylate, unsaturated polyester and allyl ester resin.

The reactive compounds may be used solely or in combination of two or more of them. When these reactive compounds are used, a part of the above-mentioned urethane (meth)acrylate is substituted by the reactive compound within a range such that the synthetic smectite content in the resin composition falls within 10 to 40% by mass. That is, 70% by mass or less of urethane (meth)acrylate can be substituted by a reactive compound. The use ratio is preferably 30 to 99% by mass of urethane (meth)acrylate and 1 to 70% by mass of the reactive compound (to 100% by mass of the total amount of urethane (meth)acrylate and the reactive compound having an ethylenically unsaturated group), more preferably 50 to 95% by mass of urethane (meth)acrylate and 5 to 50% by mass of the reactive compound and still more preferably 70 to 90% by mass of urethane (meth)acrylate and 10 to 30% by mass of the reactive compound. An amount of the reactive compound used exceeding 70% by mass is not preferred since the excellent transparency of urethane (meth)acrylate may not be exhibited, and the mechanical strength inherent to urethane (meth)acrylate may be decreased.

### Synthetic Smectite:

The synthetic smectite used in the invention is not particularly limited as far as it has a number average particle diameter of from 10 to 300 nm and an aspect ratio of from 10 to 300.

In the case where the transparent composite sheet of the invention is used as a substrate for a display, it is necessary that the average particle diameter is sufficiently smaller than the wavelength of visible light. The visible light referred herein means light having a wavelength in a range of from 380 to 740 nm. Accordingly, the number average particle diameter of the synthetic smectite is preferably in a range of from 10 to 300 nm, and more preferably in a range of from 30 to 200 nm. In the case where the number average particle diameter is less than 10 nm, there is a tendency that the coefficient of linear thermal expansion in the plane direction of the transparent sheet is not sufficiently small, and in the case where it exceeds 300 nm, particles having a particle diameter overlapping the visible light wavelength are contained, and thus it is not preferred from the standpoint of transparency. The number average particle diameter of the synthetic smectite referred herein means a number average particle diameter obtained by measuring the particles dispersed in a solvent by a dynamic light scattering method. The number average particle diameter by a dynamic light scattering method can be obtained, for example, by referring to "Ryushi-kei Keisoku Gijutsu" (Particle Diameter Measuring Techniques), edited by The Society of Powder Technology, Japan, 1994, pp. 169-179. Specific examples of the measuring equipment include a dynamic light scattering particle diameter distribution measuring equipment (for example, Model LB-550, produced by Horiba, Ltd.). It can be considered that the number average particle diameter of the synthetic smectite obtained by the dynamic light scattering method is substantially the same as the number average particle diameter of the synthetic smectite after dispersing in the resin in the invention.

The aspect ratio (Z) of the synthetic smectite is expressed by the relationship, Z = L/a. L represents the number average particle diameter in a solvent, which L is obtained by the dynamic light scattering method, and a represents the unit thickness of the synthetic smectite. The unit thickness a can be calculated by measuring diffraction peaks of a planar inorganic substance by a powder X-ray diffractometry. The synthetic smectite of the invention has an aspect ratio in a range of from 10 to 300, and more preferably in a range of from 30 to 100. The aspect ratio is preferably 10 or more from the standpoint that it is liable to be oriented in the plane direction of the transparent sheet. In the case where the synthetic smectite has an aspect ratio of less than 10, the coefficient of linear thermal expansion may not be in a prescribed range (preferably 30 ppm/°C or less). In the case where synthetic smectite having an aspect ratio exceeding 300 is used, the total light transmittance of the transparent sheet may be decreased.

The synthetic smectite may be synthesized by a known method (for example, Haruo Shirozu, "Nendokobutsu-gaku, Nendo Kagaku no Kiso" (Clay Mineralogy, Basis of Clay Science), published by Asakura Publishing Co., Ltd., 1988, pp. 98-100), and commercially available synthetic smectite may be used. Examples of the commercially available synthetic smectite include Synthetic Smectite SWN (synthetic hectorite), produced by Co-op Chemical Co., Ltd., Synthetic Silicate Laponite (synthetic hectorite) produced by Rockwood Specialties, Inc., Synthetic Inorganic Polymer Smecton SA (synthetic saponite), produced by Kunimine Industries Co., Ltd. and Synthetic Silicate Magnedium Salt Ionite (synthetic stevensite), produced by Mizusawa Industrial Chemicals, Ltd. More preferred examples among these include Synthetic Smectite SWN, produced by Co-op Chemical Co., Ltd. from the standpoint of transparency, cation exchange capacity, size and dispersibility.

The synthetic smectite is subjected to organizing treatment with a quaternary ammonium salt and/or a quaternary phosphonium salt for dispersing in the resin uniformly. Examples of the method for organizing treatment include a method of exchanging exchangeable metallic cations such as sodium and calcium present among the flake-like crystalline layers of the synthetic smectite with various kinds of substances having cationic property such as a cationic surfactant, to insert the substances among the crystalline layers of the synthetic smectite (intercalation). The organizing method is also referred to as a cation exchanging method with a cationic surfactant, and is effective for the case where the resin component of the transparent composite material of the invention has low polarity, whereby the affinity between the synthetic smectite and the low polar resin can be improved, and the synthetic smectite can be finely dispersed in the low polar resin more uniformly.

The cation exchange capacity of the synthetic smectite in this case is not particularly limited, and is preferably from 50 to 1,200 milli-equivalent per 100 g. In the case where the cation exchange capacity is less than 50 milli-equivalent per 100 g, the amount of the cationic substance intercalated among the crystalline layers of the synthetic smectite is small, and there are cases where the crystalline layers are not sufficiently made to be non-polar (hydrophobic). In the case where the cation exchange capacity exceeds 1,200 milli-equivalent per 100 g, the bonding strength among the crystalline layers of the synthetic smectite becomes too large, whereby the crystalline flakes may be difficult to be released.

The cationic surfactant used herein is not particularly limited, and examples thereof include a quaternary ammonium salt and a quaternary phosphonium salt. Among these, an alkylammonium ion salt having 6 or more carbon atoms, an aromatic quaternary ammonium ion salt and a heterocyclic quaternary ammonium ion salt are preferably used since the crystalline layers of the synthetic smectite can be sufficiently made to be hydrophobic.

The quaternary ammonium salt is not particularly limited, and examples thereof include a trimethylalkylammonium salt, a triethylalkylammonium salt, a tributylalkylammonium salt, a dimethyldialkylammonium salt, a dibutyldialkylammonium salt, a methylbenzyldialkylammonium salt, a dibenzyldialkylammonium salt, a trialkylmethylammonium salt, a trialkylethylammonium salt, a trialkylbutylammonium salt; a quaternary ammonium salt having an aromatic ring, such as benzylmethyl{2-[2-(p-1,1,3,3-tetramethylbutylphenoxy)ethoxy]ethyl}ammonium chloride and the like; a quaternary ammonium salt derived from an aromatic amine, such as trimethylphenylammonium and the like; a quaternary ammonium salt having a heterocyclic ring, such as an alkylpyridinium salt, imidazolium salt and the like; a dialkyl quaternary ammonium salt having two polyethylene glycol chains, a dialkyl quaternary ammonium salt having two polypropylene glycol chains, a trialkyl quaternary ammonium salt having one polyethylene glycol chain, a trialkyl quaternary ammonium salt having one polypropylene glycol chain and the like. Among these, lauryltrimethylammonium salt, stearyltrimethylammonium salt, trioctylmethylammonium salt, distearyldimethylammonium salt, dihydrogenated beef tallow dimethylammonium salt, distearyldibenzylammonium salt, N-polyoxyethylene-N-lauryl-N,N-dimethylammonium salt and the like are preferred. These quaternary ammonium salts may be used solely or in combination of two or more of them.

The quaternary phosphonium salt is not particularly limited, and examples thereof include dodecyltriphenylphosphonium salt, methyltriphenylphosphonium salt, lauryltrimethylphosphonium salt, stearyltrimethylphosphonium salt, trioctylmethylphosphonium salt, distearyldimethylphosphonium salt and distearyldibenzylphosphonium salt. These quaternary phosphonium salts may be used solely or in combination of two or more of them.

In the case the resin composition contains aliphatic urethane (meth)acrylate, aliphatic quaternary ammonium salt and/or quaternary phosphonium salt are preferably used, and a trialkylmethylammonium salt and a trialkyl quaternary ammonium salt having one polypropylene glycol chain are particularly preferred.

The organizing treatment may be conducted to at least part of hydroxyl groups present on the surface of the synthetic smectite by a surface modification agent in addition to those between the layers. The surface of the synthetic smectite has a functional group such as a hydroxyl group, and therefore, can be organized with a compound having a functional group having reactivity with the hydroxyl group. The compound having a functional group capable of being chemically bonded to the hydroxyl group is not particularly limited, and examples thereof include a silane compound (silane coupling agent), a titanate compound (titanate coupling agent), a glycidyl compound, an isocyanate compound, carboxylic acid and alcohol. These compounds may be used solely or in combination of two or more of them.

Among the compounds, a silane compound is preferably used. Specific examples of the silane compound include vinyltrimethoxysilane, vinyltriethoxysilane, γ-aminopropyltrimethoxysilane, γ-aminopropylmethyldimethoxysilane, γ-aminopropyldimethylmethoxysilane, γ-aminopropyltriethoxysilane, γ-aminopropylmethyldiethoxysilane, γ-aminopropyldimethylethoxysilane, methyltriethoxysilane, dimethyldimethoxysilane, trimethylmethoxysilane, hexyltrimethoxysilane, hexyltriethoxysilane, octadecyltrimethoxysilane, octadecyltriethoxysilane, γ-methacryloxypropylmethyldimethoxysilane, γ-methacryloxypropylmethyldiethoxysilane, γ-methacryloxypropyltrimethoxysilane and γ-methacryloxypropyltriethoxysilane. These silane compounds may be used solely or in combination of two or more of them.

The content of the organized synthetic smectite in the transparent composite material is preferably in a range of from 10 to 40% by mass, and more preferably in a range of from 15 to 30% by mass, based on the total amount of the resin component containing urethane (meth)acrylate and the synthetic smectite. In the case where the content of the organized synthetic smectite is less than 10% by mass, the average coefficient of linear thermal expansion of the transparent composite material at from 50 to 250°C becomes larger than 30 ppm/°C. In the case where the content of the organized synthetic smectite exceeds 40% by mass, it become difficult to disperse the synthetic smectite uniformly in the resin, and the mechanical strength of the transparent composite material is decreased to be brittle and fragile.

### Curing Agent:

The resin composition containing urethane (meth)acrylate of the invention can be cured by electron beam (EB) irradiation, ultraviolet ray (UV) irradiation or heating. In the case where UV or thermal curing is employed, a curing agent may be used. The curing agent that can be used is not particularly limited, and those that are ordinarily used as a curing agent for a polymerizable resin may be used. Among these, a radical polymerization initiator is preferably added from the standpoint of polymerization initiation of a (meth)acryloyloxy group. Examples of the radical polymerization initiator include a photopolymerization initiator, an organic peroxide and an azo initiator. For UV-curing the resin composition containing urethane (meth)acrylate of the invention, a photopolymerization initiator is particularly preferred.

Examples of the photopolymerization initiator include 2,2-dimethoxy-1,2-diphenylethan-1-one, 1-hydroxycyclohexyl phenyl ketone, benzophenone, 2-methyl-1-(4-methylthiophenyl)-2-morpholinopropan-1-one, 2-benzyl-2-dimethylamino-1-(4-morpholinophenyl)-butanone-1, 2-hydoxy-2-methyl-1-phenylpropan-1-one, 1-[4-(2-hydroxyethoxy)-phenyl]-2-hydroxy-2-one, 2-hydroxy-1-{4-[4-(2-hydroxy-2-methylpropyonyl)benzyl]phenyl}-2-methylpropan-1-one, oxyphenylacetic acid 2-[2-oxo-2-phenylacetoxyethoxy]ethyl ester, oxyphenylacetic acid 2-[2-hydroxyethoxy]ethyl ester, phenylglyoxylic acid methyl ester, 2-dimethylamino-2-(4-methylbenzyl)-1-(4-morpholin-4-ylphenyl)butan-1-one, bis(2,4,6-trimethylbenzoyl)phenylphosphine oxide, 1,2-octanedione, 1-[4-(phenylthio)phenyl-, 2-(O-benzoyloxime)], ethanone, 1-[9-ethyl-6-(2-methylbenzoyl)-9H-carbazol-3-yl]-, 1-(O-acetyloxime), iodonium, (4-methylphenyl) [4-(2-methylpropyl)phenyl] hexafluorophosphate(1-), ethyl-4-dimethylaminobenzoate, 2-ethylhexyl-4-dimethylaminobenzoate and 2,4,6-trimethylbenzoyldiphenylphosphine oxide.

As the organic peroxide, known ones may be used, such as a dialkyl peroxide, an acyl peroxide, a hydroperoxide, a ketone peroxide and a peroxyester. Specific examples thereof include diisobutyryl peroxide, cumyl peroxyneodecanoate, di-n-propyl peroxydicarbonate, diisopropyl peroxydicarbonate, di-sec-butyl peroxydicarbonate, 1,1,3,3-tetramethylbutyl peroxyneodecanoate, di(4-t-butylcyclohexyl) peroxydicarbonate, di(2-ethylhexyl) peroxidicarbonate, t-hexyl peroxyneodecanoate, t-butyl peroxyneodecanoate, t-butyl peroxyneoheptanoate, t-hexyl peroxypivalate, t-butyl peroxypivalate, di(3,5,5-trimethylhexanoyl) peroxide, dilauroyl peroxide, 1,1,3,3-tetramethylbutyl peroxy-2-ethylhexanoate, disuccinic acid peroxide, 2,5-dimethyl-2,5-di(2-ethylhexanoylperoxy)hexane, t-hexyl peroxy-2-ethylhexanoate, di(4-methylbenzoyl) peroxide, t-butyl peroxy-2-ethylhexanoate, di(3-methylbenzoyl) peroxide, benzoyl(3-methylbenzoyl) peroxide, dibenzoyl peroxide, 1,1-di(t-butylperoxy)-2-methylcyclohexane, 1,1-di(t-hexylperoxy)-3,3,5-trimethylcyclohexane, 1,1-di(t-butylperoxy)cyclohexane, 2,2-bis[4,4-di(t-butylperoxy)cyclohexyl]propane, t-hexylperoxyisopropyl monocarbonate, t-butylperoxymaleic acid, t-butyl peroxy-3,5,5-trimethylhexanoate, t-butyl peroxylaurate, t-butylperoxyisopropyl monocarbonate, t-butylperoxy-2-ethylhexyl monocarbonate, t-hexyl peroxybenzoate, 2,5-dimethyl-2,5-di(benzoylperoxy)hexane, t-butyl peroxyacetate, 2,2-di(t-butylperoxy)butane, t-butyl peroxybenzoate, n-butyl-4,4-di(t-butylperoxy) valerate, di(t-butylperoxyisopropyl)benzene, dicumyl peroxide, di(t-hexyl) peroxide, 2,5-dimethyl-2,5-di(t-butylperoxy)hexane, t-butylcumyl peroxide, di-t-butyl peroxide, p-menthane hydroperoxide, 2,5-dimethyl-2,5-di(t-butylperoxy)hexyne-3, diisopropylbenzene hydroperoxide, 1,1,3,3-tetramethylbutyl hydroperoxide, cumene hydroperoxide and t-butyl hydroperoxide.

Examples of the azo initiators include 2,2'-azobis(4-methoxy-2,4-dimethylvaleronitrile, 2,2'-azobis(2,4-dimethylvaleronitrile), dimethyl-2,2'-azobis(2-methoxypropionate), 2,2'-azobis(2-methylbutyronitrile), 1,1'-azobis(cyclohexane-1-carbonitrile), 2,2'-azobis[N-(2-propenyl)-2-methylpropionamide], 1-[(1-cyano-1-methylethyl)azo]formamide, 2,2'-azobis(N-butyl-2-methylpropionamide) and 2,2'-azobis(N-cyclohexyl-2-methylpropionamide).

The radical polymerization initiators may be used solely or in combination of two or more of them. The amount of the curing agent mixed is not particularly limited, and is preferably from 0.1 to 10 parts by mass, and more preferably from 0.5 to 5 parts by mass, per 100 parts by mass of the resin composition containing urethane (meth)acrylate. In the case where the amount of the curing agent mixed is less than 0.1 part by mass, a sufficient curing rate may not be obtained, and in the case where the amount exceeds 10 parts by mass, there are cases where the final cured product become brittle to decrease the mechanical strength thereof.

### Additives:

To the resin composition containing urethane (meth)acrylate for a transparent composite material of the invention, additives such as an antioxidant, a lubricant and an ultraviolet ray absorbent may be added depending on necessity, for improving hardness, strength, moldability, durability and water resistance.

The antioxidant is not particularly limited, and products that are ordinarily used may be used. Among these, a phenol antioxidant, an amine antioxidant, a sulfur antioxidant, a phosphorus antioxidant and the like are preferred, and a phenol antioxidant is particularly preferred. Examples of the phenol antioxidant include 2,6-di-t-butyl-p-cresol, 4,4-butylidenebis-(6-t-butyl-3-methylphenol), 2,2'-methylenebis-(4-methyl-6-t-butylphenol), 2,2'-methylenebis(4-ethyl-6-t-butylphenol), 2,6-di-t-butyl-4-ethylphenol, 1,1,3-tris(2-methyl-4-hydroxy-5-t-butylphenyl)butane, n-octadecyl-3-(3,5-di-t-butyl-4-hydroxyphenyl) propionate, tetrakis[methylene-3-(3,5-di-t-butyl-4-hydroxyphenyl) propionate]methane, triethylene glycol bis[3-(3-t-butyl-4-hydroxy-5-methylphenyl) propionate], tris(3,5-di-t-butyl-4-hydroxybenzyl) isocyanurate, 4,4-thiobis(6-t-butyl-3-methylphenol), 3,9-bis[2-[3-(3-t-butyl-4-hydroxy-5-methylphenyl)propionyloxy]-1,1'-dimethylethyl]-2,4,8,10-tetraoxa-spiro[5,5]undecane, thiodiethylenebis[3-(3,5-di-t-butyl-4-hydroxyphenyl) propionate], N,N'-hexan-1,6-diylbis[3-(3,5-di-t-butyl-4-hydroxyphenyl)-propionamide] and the like. Examples of an amine antioxidant include alkyldiphenylamine, N,N'-di-sec-butyl-p-phenylenediamine, N-phenyl-N'-1,3-dimethylbutyl-p-phenylenediamine and dialkylhydroxylamine. Examples of the sulfur antioxidant include dilauryl-3,3'-thiodipropionate, ditridecyl-3,3'-thiodipropionate, dimyristyl-3,3'-thiodipropionate, distearyl-3,3'-thiodipropionate, pentaerythrityltetrakis(3-laurylthiopropionate) and the like. Examples of the phosphorus antioxidant include tris[2-[[2,4,8,10-tetra-t-butylbenzo[d,f][1,3,2]dioxa-phosphephin-6-yl]oxy]ethyl]amine, bis[2,4-bis(1,1-dimethylethyl)-6-methylphenyl]ethyl ester phosphite and tetrakis(2,4-di-t-butylphenyl)[1,1-biphenyl]-4,4'-diyl bisphonite. The antioxidants may be used solely or in combination of two or more of them.

The lubricant is not particularly limited, and products that are ordinarily used may be used. Among these, a metallic soap lubricant, a fatty acid ester lubricant, an aliphatic hydrocarbon lubricant and the like are preferred, and a metallic soap lubricant is particularly preferred. Examples of the metallic soap lubricant include barium stearate, calcium stearate, zinc stearate, magnesium stearate and aluminum stearate. These may be used as a composite.

The ultraviolet ray absorbent is not particularly limited, and products that are ordinarily used may be used. Among these, a benzophenone ultraviolet ray absorbent, a benzotriazole ultraviolet ray absorbent and a cyanoacrylate ultraviolet ray absorbent are preferred, and a benzophenone ultraviolet ray absorbent is particularly preferred. Examples of the benzophenone ultraviolet ray absorbent include 2-(2'-hydroxy-5'-methyphenyl)benzotriazole, 2-(2'-hydroxy-5'-butylphenyl)benzotriazole and 2-(2-hydroxy-3'-tert-butylphenyl)benzotriazole.

The additives are not limited to the aforementioned specific examples, and a defoaming agent, a leveling agent, a releasing agent, a water repellant, a flame retarder, a contraction preventing agent, a crosslinking assistant and the like may be added as long as the objects and advantages of the invention are not impaired.

### Solvent:

In the invention, a solvent is preferably used for effectively releasing the layers of the synthetic smectite for dispersing in the resin composition containing urethane (meth)acrylate. Examples of the solvent include an aromatic hydrocarbon compound such as benzene, toluene, xylene, ethylbenzene, mesitylene, n-propylbenzene and isopropylbenzene; an acetate ester compound such as methyl acetate, ethyl acetate, propyl acetate and butyl acetate; a ketone compound such as acetone, methyl ethyl ketone and methyl isobutyl ketone; an ether compound such as diethyl ether, tetrahydrofuran and 1,4-dioxane; an alcohol compound such as methanol, ethanol, (iso)propanol and butyl alcohol; a halogenated hydrocarbon compound such as chloroform and methylene chloride; a nitrogen-containing solvent such as N,N-dimethylformamide, N-methylpyrrolidone, pyridine and acetonitrile; and the like. Preferred examples thereof include water, an alcohol compound such as methanol, toluene, xylene and N-methylpyrrolidone from the viewpoint of handleability.

The proportion of the solvent to the synthetic smectite varies depending on the kind of the solvent, and is from 100 to 10,000 parts by mass, and more preferably from 200 to 5,000 parts by mass, per 100 parts by mass of the synthetic smectite. In the case where the proportion of the solvent is less than 100 parts by mass, the viscosity of the mixture liquid is increased to make it difficult to mix uniformly.

### Method for producing transparent sheets:

The transparent sheet of the invention can be produced by coating a mixture of synthetic smectite organized with a quaternary ammonium salt and/or a quaternary phosphonium salt, urethane (meth)acrylate, a reactive compound having an ethylenically unsaturated group as needed and a solvent on a substrate, curing the coated mixture with electron beam (EB) irradiation or ultra violet (UV) irradiation or by heating, and releasing the resulting transparent sheet from the substrate.

The mixture of the urethane (meth)acrylate, a reactive compound having an ethylenically unsaturated group which is used as needed (hereinafter referred to as "resin component"), synthetic smectite and the solvent can be produced, for example, by (1) a method of mixing a solution containing the resin component dissolved in a solvent and a dispersion liquid containing the synthetic smectite dispersed in a solvent, (2) a method of adding and dissolving the resin component directly to a dispersion liquid containing the synthetic smectite dispersed in a solvent, (3) a method of adding and dispersing the synthetic smectite to the resin component having been dissolved in a solvent, or (4) a method of dissolving and dispersing a mixture obtained by heating and kneading the resin component and the synthetic smectite in a solvent. Among these, such a method is particularly preferred that a solution containing the resin component dissolved in a solvent and a dispersion liquid containing the synthetic smectite dispersed in a solvent are mixed, from the standpoint of dispersibility of the synthetic smectite. The dispersing method is not particularly limited, and a known method may be used, such as a heating treatment, Mixrotor, a magnetic stirrer, a homogenizer, a Henschel mixer, a beads mill, an ultra-high pressure atomizing device and application of ultrasonic wave.

Next, the dispersion liquid of mixture comprising the synthetic smectite, urethane (meth)acrylate, a reactive compound containing an ethylenically unsaturated group which is used as needed, and the solvent is depressurized for deaeration and/or concentration, whereby the viscosity of the dispersion liquid is controlled to a viscosity that is optimum for coating. The viscosity of the dispersion liquid is not particularly limited, but it is preferred that the viscosity is suitable for the forming method. For example, in the case of a roll coating method and a doctor knife coating method, the viscosity is preferably in a range of from 0.01 to 1,000 Pa·s at 25°C. A viscosity of less than 0.01 Pa·s or exceeding 1,000 Pa·s is not preferred since the workability is deteriorated. In the case where the viscosity is too high at ordinary temperature, the workability can be improved by increasing the temperature of the dispersion liquid. In the case where the depressurizing time is short, gaseous matters in the dispersion liquid cannot be sufficiently removed and form bubbles upon coating, drying and curing steps, thereby failing to provide a smooth transparent sheet.

Upon coating, the dispersion liquid having been deaerated and/or concentrated and controlled in viscosity by reducing the pressure is used as a coating liquid, and is coated on a smooth substrate such as glass, metal and a plastic film by a method that is ordinarily employed industrially, such as a direct gravure method, a reverse gravure method, a microgravure method, a roll coating method such as a two-roll bead coating method and a bottom feed three-roll reverse coating method, a doctor knife coating method, a die coating method, a dip coating method, a bar coating method, a coating method combining these methods, and the like. Among these, a roll coating method and a doctor knife coating method are preferred since these methods apply a force functioning in parallel to the substrate (shearing force) for orienting the synthetic smectite in the plane direction. The term "orienting in the plane direction" means that most of the synthetic smectite layers are oriented in parallel to the surface of the substrate. In the case where the synthetic smectite layers are oriented in the plane direction, the coefficient of linear thermal expansion of the transparent sheet in the plane direction can be effectively decreased. Furthermore, the layers of the synthetic smectite are oriented in the plane direction, whereby the total light transmittance is high even if the content of the synthetic smectite is large.

In the case where a solvent that is capable of being evaporated is used for dispersing the synthetic smectite and for controlling the viscosity, the synthetic smectite can be further oriented in the plane direction. Specifically, the mixture of the synthetic smectite, the resin composition comprising urethane (meth)acrylate and the solvent is applied on the substrate, and then only the solvent is evaporated, whereby the coating liquid is contracted only in the thickness direction, thereby further orienting the synthetic smectite in the plane direction in the resin. In the case where the reactive monomer is used, it is preferred that a reactive monomer that has relatively low volatility is used in combination with a solvent having high volatility, and the solvent is dried under suitable conditions (such as temperature, pressure and time). The method of orienting the synthetic smectite in the plane direction by evaporating the solvent can be employed in combination with the roll coating method and/or the doctor knife coating method mentioned above, but a coating method without application of shearing force may be employed solely.

The temperature, at which the solvent is evaporated, is preferably from 0 to 200°C. A temperature of less than 0°C is not preferred since the evaporation speed becomes significantly lowered. A temperature exceeding 200°C is not preferred since bubbling of the solvent due to rapid evaporation and boiling or gelation of the resin occurs, which results in possibilities of decrease in surface smoothness and increase in haze value. The temperature is more preferably from 10 to 100°C. The pressure, at which the solvent is evaporated, is preferably from 10 Pa to 1 MPa. A pressure of lower than 1 Pa is not preferred since bumping may occur, which results in possibilities of decrease in surface smoothness and increase in haze value. The pressure is more preferably from 10 to 200 Pa. The period of time for evaporating the solvent is preferably from 1 to 120 minutes. In the case where the period is less than 1 minute, the solvent cannot be sufficiently evaporated, thereby forming bubbles upon curing. A period of time exceeding 120 minutes is not preferred since the productivity is decreased. Upon evaporating the solvent, a gas may be used, such as air, nitrogen, argon and carbon dioxide. The gas may contain an evaporated component of the solvent. The flow rate of the gas upon evaporating the solvent is preferably from 0.01 to 200 m/s. A flow rate of less than 0.01 m/s is not preferred since the evaporated component of the solvent is accumulated. A flow rate exceeding 200 m/s is not preferred since the coating composition becomes heterogeneous. The flow rate is more preferably from 0.1 to 50 m/s.

The composition is finally sandwiched with smooth substrates such as glass, metal and a plastic film, cured with EB irradiation or UV irradiation or cured by heating, followed by releasing from the substrate, to obtain a transparent sheet. In the case where the composition is not sandwiched with the smooth substrates such as glass, metal and a plastic film, the composition is cured with EB irradiation or UV irradiation or cured by heating in an inert gas (such as nitrogen, argon and carbon dioxide) atmosphere, followed by releasing from the substrate, to obtain a transparent sheet. Examples of the method include a method, in which the resin composition comprising urethane (meth)acrylate before curing having the synthetic smectite dispersed therein and containing the solvent is coated on a plane having a smooth surface, for example, a biaxially stretched polyethylene terephthalate film, in the aforementioned method, then the solvent is evaporated, sandwiched with biaxially stretched polyethylene terephthalate films having a smooth surface, and cured with EB irradiation, UV irradiation or cured by heating.

In the case where the resin composition comprising urethane (meth)acrylate is cured with EB irradiation, a polymerization initiator is not necessary. In the case where the composition is completely cured by after-curing, however, a thermal polymerization initiator may be used in combination. The electron beam acceleration voltage upon EB irradiation is from 30 to 500 kV, and preferably from 50 to 300 kV. The electron beam irradiation dose is from 1 to 300 kGy, and preferably from 5 to 200 kGy. In the case where the electron beam acceleration voltage is less than 30 kV, shortage of the transmitted electron beam may occur when the composition has a large thickness, and in the case where it exceeds 500 kV, the operation is economically deteriorated. An electron beam irradiation dose exceeding 300 kGy is not preferred since the substrate may be damaged.

In the case where the resin composition comprising urethane (meth)acrylate is cured with UV irradiation, the curing temperature is from 0 to 150°C, and preferably from 10 to 130°C. The UV irradiation time is from 0.01 to 10 hours, preferably from 0.05 to 1 hour, and further preferably from 0.1 to 0.5 hour. The UV accumulated light amount is from 10 to 5,000 mJ/cm² An accumulated light amount being less than 10 mJ/cm² is not preferred since the composition may be insufficiently cured. An accumulated light amount exceeding 5,000 mJ/cm² may decrease the productivity.

In the case where the resin composition comprising urethane (meth)acrylate is cured by heating, the curing temperature is from 30 to 160°C, and preferably from 40 to 130°C. In consideration of suppressing contraction and distortion upon curing, a method of slowly curing by increasing the temperature is preferable, and the curing time is from 0.5 to 100 hours, and preferably from 3 to 50 hours.

In the case where the resin composition comprising urethane (meth)acrylate is insufficiently cured after curing by EB irradiation, UV irradiation or heating, the composition can be completely cured by after-curing. Upon performing the after-curing, the transparent sheet may be released from the smooth substrate such as glass, metal and a plastic film, or may not be released therefrom. The temperature for the after-curing is from 50 to 300°C, and preferably from 80 to 250°C. The period of time for the after-curing is from 0.1 to 10 hours, and preferably from 0.5 to 5 hours. The pressure for the after-curing may be from 1.0 × 10⁻⁷ Pa to 1 MPa, and preferably from 1.0 × 10⁻⁶ Pa to 0.5 MPa. The atmosphere for the after-curing may be such atmospheres as air, nitrogen, argon and carbon dioxide, and a nitrogen atmosphere is preferred from the standpoint of decreasing coloration.

In the case where a transparent sheet containing two or more layers is produced, such methods may be employed as a method of coating (and drying) one layer on a substrate firstly and repeatedly coating (and drying) other layers thereon, followed by subjecting to curing by EB irradiation, UV irradiation or heating, and the releasing from the substrate, and a method of producing two or more sheets, and then the two or more sheets are laminated. In the case where two or more sheets are laminated, the interfaces of two sheets may be subjected to such a treatment as a corona treatment and an anchor coating.

### EXAMPLES

The invention will be described with reference to Examples and Comparative Examples below, but the invention is not limited to the description.

### Measurement of Coefficient of Linear Thermal Expansion and Tg:

The coefficient of linear thermal expansion was measured with TMA/SS6100, produced by SII NanoTechnology Inc., in a tensile mode. A test piece in a film form had a thickness of 100 µm × 3 mm × 12 mm (chuck distance: 10 mm) and was applied with a tension of 0.001 kgf, the temperature of which was increased to 250°C at a temperature increasing rate of 5°C per minute in an atmosphere containing 100 ml/min of nitrogen and then the heating device (heater) was turned off and the temperature was cooled to 50°C while the nitrogen flow was maintained at 100 ml/min, and the elongation rate of the test piece was measured by again increasing the temperature from 50°C to 250°C at a temperature increasing rate of 5°C per minute. The average coefficient of linear thermal expansion in the plane direction within a range of from 50 to 250°C was calculated from the difference in elongation between 50°C and 250°C and the temperature difference (200°C). The temperature of the discontinuous point in elongation rate was designated as the glass transition temperature (Tg).

### Total Light Transmittance:

The total light transmittance was measured with an automatic haze meter, TC-H3DPK, produced by Tokyo Denshoku Co., Ltd., according to JIS K-7361-1.

### Haze:

The haze value was measured with an automatic haze meter, TC-H3DPK, produced by Tokyo Denshoku Co., Ltd., according to JIS K-7136.

### Organic modified synthetic smectite:

The following two types of organic modified synthetic smectite were used for evaluation.

### Clay (1):

Organic modified synthetic smectite subjected to cation exchange treatment with trioctyl methyl ammonium salt (synthetic smectite (Synthetic Smectite STN manufactured by Co-op Chemical Co., Ltd.; number average particle diameter: 50 nm, aspect ratio: 50, inorganic component: 71%) Clay (2):

20 g of synthetic smectite having the composition of hectorite, wherein basal-plane spacing is 12.5 Å in air and cation exchange capacity is 90 milli-equivalent per 100 g was dispersed in 1000 ml of water, added with 9 g of trioctyl methyl ammonium chloride to thereby be reacted at room temperature for two hours while being stirred. Next, the reaction product was filtrated and washed with water to remove by-product salts. Subsequently, the product was dried and pulverized to obtain organic modified smectite (number average particle diameter: 50 nm, aspect ratio: 50, inorganic component: 76%).

### Resin:

The following five types of oligomer as a resin component were used for evaluation.

### Oligomer (1): Urethane acrylate resin

1 mol of Eternacoll UC-100 (manufactured by Ube Industries, Ltd.; cyclohexane dimethanol-type polycarbonatediol; a number average molecular weight of 1,000), 2 mol of isophorone diisocyanate, 67 parts by mass (hereinafter referred to as "parts") of toluene (based on the total of Eternacoll UC-100, isophorone diisocyanate and 2-hydroxyethyl acrylate), 0.01 parts of dibutyltin dilaurate were charged in a 5 1-volume four-neck flask equipped with a stirrer, a reflux condenser, an air introducing tube and a thermometer followed by stirring at 80°C for four hours. Subsequently, 2 mol of 2-hydroxyethyl acrylate was delivered by drops into the flask for two hours and after completion of the instillation, the mixture was stirred for five hours. The thus-obtained reaction product (toluene solution) is referred to as "oligomer (1)".

### Oligomer (2): Allyl ester resin

1,625 g of diallyl 1,4-cyclohexanedicarboxylate, 327 g of propylene glycol and 0.813 g of dibutyltin oxide were charged in a 2-L three-neck flask equipped with distillation apparatus, and heated under a nitrogen stream while distilling off alcohol formed at 180°C. At the time when the amount of the alcohol distilled off was about 350 g, the reaction system was gradually depressurized to 6.6 kPa (over about 4 hours) to accelerate the distillation rate of allyl alcohol. After the distillate was substantially not generated, the reaction system was depressurized to 0.5 kPa, and the reaction was further performed for one hour, followed by cooling the reaction product to room temperature. The reaction product thus obtained is referred to as Oligomer (2).

Oligomer (3): Urethane acrylate EB8465 manufactured by DAICEL-CYTEC Company Ltd.
(a number average molecular weight: 1400, number of functional groups (acryloyl (double bond) groups contained in one molecular of the oligomer): 3, n=4 and m=2 in formula (1))

Oligomer (4): Urethane acrylate EB8405 manufactured by DAICEL-CYTEC Company Ltd.
(a number average molecular weight: 2700, number of functional groups (acryloyl (double bond) groups contained in one molecular of the oligomer): 4, n=4 and m=2 in formula (1))

### Oligomer (5): Epoxy acrylate resin

276.3 parts (parts by mass, hereinafter the same) of a hydrogenated bisphenol A epoxy resin ST-4000D (a trade name, epoxy equivalent: 725), produced by Tohto Kasei Co., Ltd., 202.5 parts of toluene and 0.19 part of 4-methoxyphenol (MEHQ: hydroquinone monomethyl ether) as a polymerization inhibitor were charged in a four-neck flask equipped with a thermostat, a stirrer, a Dimroth condenser and an air introducing tube, and the temperature was increased to 80°C while dry air was blown (20 ml/min), followed by stirring until the mixture became homogeneous. After the mixture was homogeneous, 27.5 parts of acrylic acid, produced by Kuraray Co., Ltd., and 1.24 parts of benzyltriphenylphosphonium chloride (TPP-ZC, a trade name, produced by Hokko Chemical Industry Co., Ltd.) as a catalyst were added and reacted at a temperature controlled to 110°C for 7 hours. The reaction was terminated at an acid value of 7.8 mgKOH/g to obtain Oligomer (5) (toluene solution).

### Example 1

27 g of toluene was placed in a 100-mL sample bottle, to which 3 g of clay (1) was added little by little under stirring with a stirrer. After closing the sample bottle with a lid, the mixture was stirred with Mixrotor at room temperature for one day to obtain a smectite dispersion liquid. A toluene solution of Oligomer (1) (7 g in terms of resin amount) was added to the smectite dispersion liquid, and 0.4 g of an UV curing agent (Irgacure 651, produced by Ciba Specialty Chemicals Co., Ltd.) was added, followed by sufficiently stirring, to obtain composition (1). Composition (1) was attached to an evaporator and stirred at room temperature under 20 kPa for 10 minutes for controlling the viscosity and removing the gaseous components in the composition.

Composition (1) was applied on a PET film (thickness: 50 µm) with a bar coater to a dry thickness of 100 µm. The composition was dried with a hot air dryer at 80°C for 30 minutes to evaporate toluene as a solvent, and then covered from above with a PET film (thickness: 50 µm). The composition was cured with UV at an UV irradiation dose of 1,000 mJ/cm², and the PET films on both sides were released to obtain sample film (1). The film had a coefficient of linear thermal expansion of 21 ppm/°C, and no Tg was observed therein. The total light transmittance thereof was 89%, and the haze thereof was 4.9%. When the film was bent to at a 180-degree angle to evaluate the flexibility, crackings did not occur in the film.

### Comparative Example 1:

A sample film (2) was obtained by performing the same operations as in Example 1 except that composition (2) prepared in the similar way only by changing Oligomer (1) to Oligomer (2) was used, and the UV irradiation dose was changed to 3,000 J/cm². The film had a coefficient of linear thermal expansion of 84 ppm/°C, and no Tg was observed therein. The total light transmittance thereof was 91%, and the haze thereof was 2.1%.

### Example 2:

70 g of Oligomer (3), 30 g of clay (2), 0.7 g of an UV curing agent (produced by Ciba Specialty Chemicals Co., Ltd.; IRGACURE 184) and 270 g of toluene were added to a 500 ml-volume PTFE bottle and fully stirred to obtain Composition (3). Composition (3) was subjected to mixing and dispersing treatment for 10 minutes using a beads mill (zirconia beads having Φ 2 mm).

Composition (3) was attached to an evaporator for defoaming and controlling the viscosity, and applied on a PET film (thickness: 50 µm) with an applicator to a dry thickness of 100 µm. The composition was dried with a hot air dryer at 80°C for 30 minutes to evaporate toluene as a solvent, and then covered from above with a PET film (thickness: 50 µm). The composition was cured with UV at an UV irradiation dose of 1,000 mJ/cm², and the PET films on both sides were released to obtain sample film (3). The film had a coefficient of linear thermal expansion of 22 ppm/°C, and no Tg was observed therein. The total light transmittance thereof was 91%, and the haze thereof was 2.2%. When the film was bent to at a 180-degree angle to evaluate the flexibility, crackings did not occur in the film.

### Example 3:

A sample film (4) was obtained by performing the same operations as in Example 2 except for using composition (4) prepared in the similar way only by changing Oligomer (3) to Oligomer (4). The film had a coefficient of linear thermal expansion of 28 ppm/°C, and no Tg was observed therein. The total light transmittance thereof was 91%, and the haze thereof was 2.2%.

### Comparative Example 2:

A sample film (5) was obtained by performing the same operations as in Example 1 except for using Composition (5) prepared in the similar way only by changing Oligomer (3) to Oligomer (5). The film had a coefficient of linear thermal expansion of 13 ppm/°C, and no Tg was observed therein. The total light transmittance thereof was 91%, and the haze thereof was 1.5%. When the film was bent to at a 180-degree angle to evaluate the flexibility, crackings occurred in the film.

The property values of sample films (1) to (5) obtained in the above Examples 1 to 3 and Comparative Examples 1 and 2 are shown in Table 1.

**Table 1**

| | Resin | Smectite | | Coefficient of linear thermal expansion (ppm/°C) | Total light transmittance (%) | Haze (%) |
|---|---|---|---|---|---|---|
| | | Type | Amount added (% by mass) | | | |
| Example 1 | Oligomer (1) | Clay (1) | 30 | 21 | 89 | 4.9 |
| Comparative Example 1 | Oligomer (2) | Clay (1) | 30 | 84 | 91 | 2.1 |
| Example 2 | Oligomer (3) | Clay (2) | 30 | 22 | 91 | 2.2 |
| Example 3 | Oligomer (4) | Clay (2) | 30 | 28 | 91 | 2.2 |
| Comparative Example 2 | Oligomer (5) | Clay (2) | 30 | 13 | 91 | 1.5 |

## Claims

1. A transparent composite material comprising a cured product of a resin composition containing urethane (meth)acrylate, in which 10 to 40% by mass of synthetic smectite that is organized with a quaternary ammonium salt and/or a quaternary phosphonium salt and has a number average particle diameter of from 10 to 300 nm and an aspect ratio of from 10 to 300 is dispersed.

2. The transparent composite material according to claim 1, wherein the urethane (meth)acrylate is synthesized using polyol having a polycarbonate structure.

3. The transparent composite material according to claim 1 or 2, wherein the urethane (meth)acrylate is synthesized from polyol having a unit represented by formula (1) 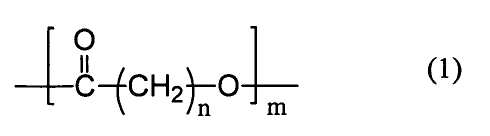 (in the formula, m represents a positive integer and n represents an integer of 3 to 7) and/or (meth)acrylate containing hydroxyl group.

4. The transparent composite material according to claim 3, wherein the urethane (meth)acrylate is synthesized using caprolactone modified polyol.

5. The transparent composite material according to claim 3, wherein the urethane (meth)acrylate is synthesized using caprolactone modified (meth)acrylate.

6. The transparent composite material according to any one of claims 1 to 5, wherein the urethane (meth)acrylate is synthesized using one or more polyisocyanate selected from hydrogenerated xylylene diisocyanate, hydrogenerated diphenylmethane diisocyanate, isophorone diisocyanate, hexamethylene diisocyanate and tris(6-isocyanatehexyl)isocyanurate.

7. The transparent composite material according to any one of claims 1 to 6, wherein the resin component containing urethane (meth)acrylate comprises 1 to 70 mass% of a reactive compound having an ethylenically unsaturated group.

8. The transparent composite material according to claim 1, wherein the synthetic smectite is at least one selected from synthetic hectorite, synthetic saponite and synthetic stevensite.

9. The transparent composite material according to claim 1 or 8, wherein the quaternary ammonium salt for organizing the synthetic smectite is at least one selected from lauryltrimethylammonium salt, stearyltrimethylammonium salt, trioctylmethylammonium salt, distearyldimethylammonium salt, dihydrogenated beef tallow dimethylammonium salt, distearyldibenzylammonium salt and N-polyoxyethylene-N-lauryl-N,N-dimethylammonium salt.

10. The transparent composite material according to claim 1, 8 or 9, wherein at least a part of hydroxyl groups present on a surface of the synthetic smectite is treated with a surface modification agent.

11. The transparent composite material according to claim 10, wherein the surface modification agent is at least one member selected from a silane coupling agent, a titanate coupling agent, a glycidyl compound, an isocyanate compound, carboxylic acid and alcohol.

12. A transparent sheet comprising the transparent composite material according to any one of claims 1 to 11 and having an average coefficient of linear thermal expansion of 30 ppm/°C or less in a planar direction at from 50 to 250°C and a total light transmittance of 85% or more per 100 µm in thickness.

13. A method for producing the transparent composite sheet having an average coefficient of linear thermal expansion of 30 ppm/°C or less in a planar direction at from 50 to 250°C and a total light transmittance of 85% or more per 100 µm in thickness, comprising the steps of: coating a resin composition comprising synthetic smectite that is organized with a quaternary ammonium and/or a quaternary phosphonium, urethane (meth)acrylate and a solvent on a flat plane having a smooth surface; then drying the solvent; holding the flat plane with sheets or films having a smooth surface; and curing with an electron beam (EB), an ultraviolet ray (UV) or heat.

14. The method for producing the transparent composite sheet according to claim 13, wherein the resin composition further comprises a reactive compound having an ethylenically unsaturated group.

15. A display device comprising, as a substrate, the transparent composite material according to any one of claims 1 to 11.

16. The display device according to claim 15, wherein the display device is a liquid crystal display, an organic EL display or electronic paper.

17. A substrate for a solar cell comprising, as a substrate, the transparent composite material according to any one of claims 1 to 11.
